Europäisches Patentamt

European Patent Office

Office européen des brevets

(19)

(11) Publication number: **0 307 366 B1**

# EUROPEAN PATENT SPECIFICATION

(12)

(45) Date of publication of patent specification :
18.09.91 Bulletin 91/38

(51) Int. Cl.⁵ : **B62D 5/12, B62D 5/06**

(21) Application number : 88830302.1

(22) Date of filing : 14.07.88

(54) A device for converting a manually operated steering into a power steering.

(30) Priority : 05.08.87 IT 4827287

(43) Date of publication of application :
15.03.89 Bulletin 89/11

(45) Publication of the grant of the patent :
18.09.91 Bulletin 91/38

(84) Designated Contracting States :
AT BE CH DE ES FR GB GR LI LU NL SE

(56) References cited :
DE-A- 3 209 057
DE-A- 3 215 220

(73) Proprietor : B-ART S.r.l.
Via Mazzini, 174
I-40139 Bologna (IT)

(72) Inventor : Biagini, Livio
c/o B-ART S.r.l. Via Mazzini 174
I-40139 Bologna (IT)

(74) Representative : de Simone, Domenico et al
Ing. Barzanò & Zanardo Roma S.p.A. Via
Piemonte 26
I-00187 Roma (IT)

## Description

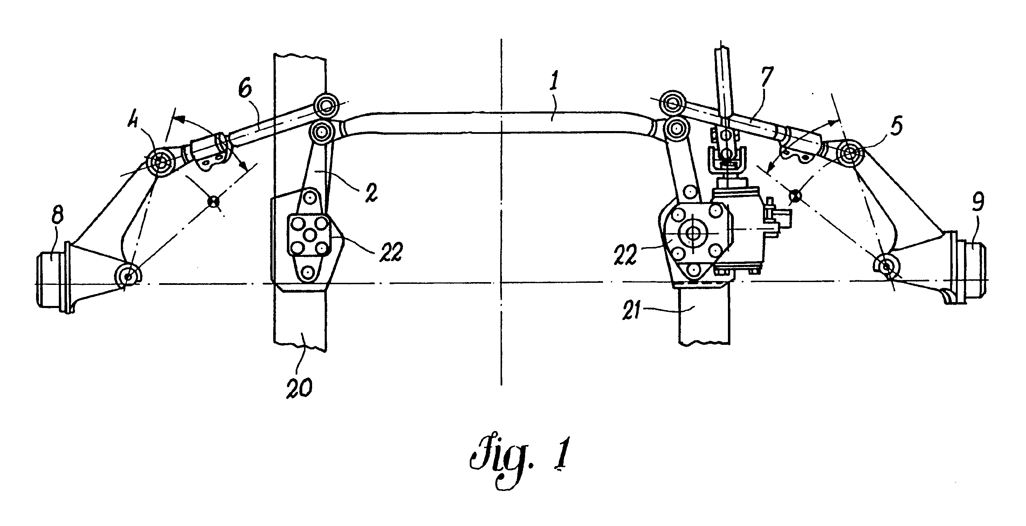

This invention relates to a device for converting a manually operated steering according to the preamble of claim 1 and represented in Figure 1, into a power steering. More particularly, this invention relates to a device of the kind mentioned above, which allows the steering box to be substituted by a rack-and-pinion power steering box, leaving the kinematic motion assembly unchanged, and with no need for changes in the chassis or in the steering members.

As is well known, off-road vehicles, including the ARO 10 model, are affected by the shortcoming of a high steering effort.

In order to avoid such shortcoming, the power steering has been adopted in the latest models put on the market.

Indeed, many problems arose on the contrary in the attempt at modifying old design vehicles by converting the manually operated steering into a power steering.

More particularly, in many vehicles of such kind a level difference is present between the anchoring points of the steering box and the positions of the ball-and-socket joints connected to the steering arms of the wheel hubs, so that the only possibility of making the change mentioned above consists in the operation of modifying the chassis, the bodywork and, possibly, the various members connected to the wheel hub.

Accordingly, the Applicant has realized a device to overcome the problems mentioned above, said device being able to allow the manually operated steering to be converted into a power steering without requiring the modification of the vehicle kinematic motion and without any need for changes in the chassis or in the steering members.

It is a further object of the present invention that of providing a device of the kind mentioned above, said device being interchangeable on the already existing vehicles through very simple substitutions of the already existing parts.

It is quite evident that the availability of the device of the present invention is highly advantageous, said device being fit for assembly on and type of vehicle already existing, in which a level difference is present between the plane of the kinematic articulation and the steering arms ends, more particularly in the case of off-road vehicles such as the four-wheel drive ARO 10, where the steering efforts are quite high because of the particular conditions of employment.

In order to realize the objects mentioned above the Applicant suggests the employment of a bar of a suitable shape whose functions consist in guiding the steering arms which are kept unchanged in position with respect to their positions in the manually operated steering version.

Accordingly, it is a specific object of the present invention a device for converting a manually operated steering into a power steering, said manually operated steering comprising two steering levers and two steering arms, rigidly connected to the hubs of the wheels of the vehicle, characterised in that said power steering comprises an hydraulic power steering connected to said steering arms in the same point where said arms are connected to the hubs, and two jointing heads placed in a point corresponding to the connection between the steering levers and the steering arms ; the device comprising a shaped bar, connected to said jointing heads of the power steering box, said bar also connecting rigidly the two levers of the manually operated steering so as to transmit the steering effort caused by the hydraulic assembly of the power steering box to such levers and to the wheel hubs.

According to the preferred embodiment of the device of the present invention said shaped bar is connected to the two steering levers mentioned above through the interposition of articulated flanges.

Again according to the present invention the connection between the shaped bar and the heads of the power steering box is realized through ball-and-socket joints.

Further according to the present invention said power steering box is fixed to the already existing framework through a transverse connection member which also acts as a stiffening member of the chassis.

As already pointed out above, the device according to the present invention allows a power steering box to be applied to old design cars, such as the ARO 10, employing the holes already provided for the manually operated steering, or otherwise employing holes which can be readily drilled in case of changes in the chassis in future versions.

The present invention will be disclosed in the following just for illustrative and not for limitative purposes, with particular reference to the Figures of the enclosed drawings, wherein :

Figure 1 is a top view of a manually operated steering ;

Figure 2 is a top view of a steering modified by means of the device according to the present invention ; and

Figure 3 is a side view of the steering shown in Figure 2.

With reference now to all Figures shown in the enclosed drawings, it can be observed that the manually operated steering (Figure 1) is supplied with a bar 1 connecting the two steering levers 2 and 3.

In that version, there is a very large level difference between the kinematic articulation plane and the points 4 and 5, where the steering arms 6 and 7 are rigidly connected to the wheel hubs 8 and 9.

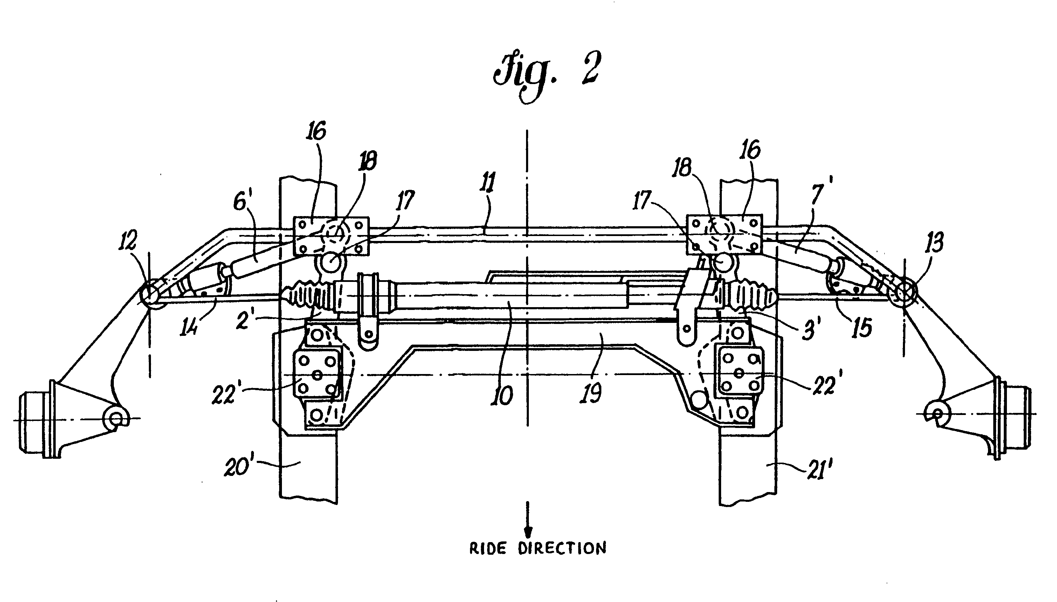

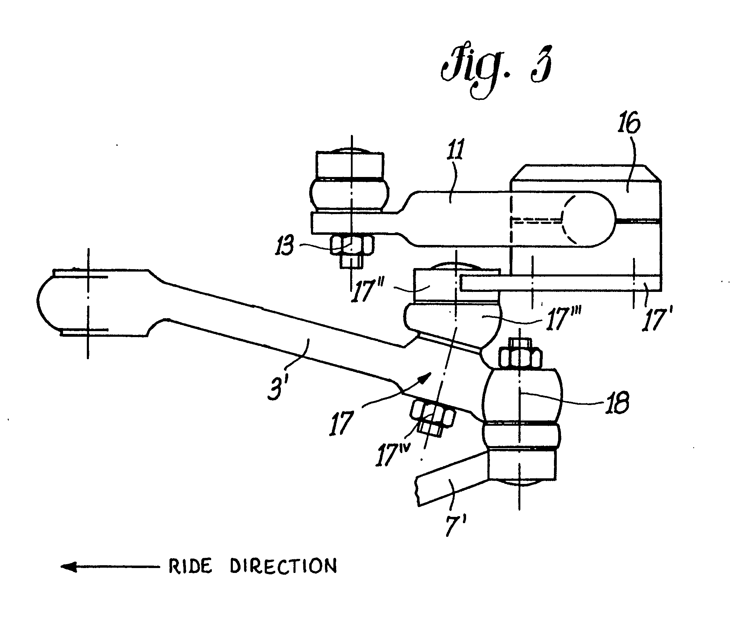

The solution to the problem according to the present invention (Figures 2 and 3) provides the substitution of the bar 1 of Figure 1 by a bar 11, in order to have the possibility of inserting the hydraulic power steering 10 with no need for changes or modifications in the chassis or in the kinematic motion. Said bar 11 connects rigidly the two steering levers 2' and 3', at the points where the bar 1 was connected to the levers 2 and 3, and in addition said bar is connected at the points 12 and 13 (see also Figure 3) to the head of said hydraulic power steering 10.

More particularly, the latter connection occurs between the bar 11 and the small arms 14 and 15 of said hydraulic power steering.

Levers 2' and 3' are fastened to the bar 11 (see in particular Figure 3) through flanges 16 fixed to the jointing heads 17 formed by the members 17', 17", 17''' and 17"" which are integral with respect to one another.

Said jointing heads 17 in turn are connected to the point 18 that is the connection point of the steering levers 2' and 3' and the steering arms 6' and 7' which are connected rigidly to the wheel hubs 8' and 9' as already mentioned above with reference to Figure 1.

Accordingly, the shaped bar 11 transmits the motion received by the small heads of said hydraulic power steering 10 (points 12 and 13) to the steering levers 2' and 3' which are rigidly connected to said heads, and then to the wheel hubs though the steering arms 6' and 7', with no need for modification in the structure of the chassis or in the kinematic motion.

Moreover, the hydraulic power steering 10 can be fastened through a bracket 19 to the frames 20' and 21' of the chassis employing the already existing holes and the guiding turret 22' corresponding to the turret 22 already provided.

The enclosed drawings show in particular a solution purposely provided for the vehicle ARO 10 whose original kinematic motion (Figure 1) shows predetermined steering angles (forward ride, convergence).

Such solution to the problem avoids making any modifications in the articulation points, so that unacceptable changes in the steering angles are avoided.

## Claims

1. Device for converting a manually operated steering into a power steering, said manually operated steering comprising two steering levers (2', 3') and two steering arms (6', 7') rigidly connected to the hubs (8, 9) of the wheels of the vehicle, characterised in that said power steering comprises an hydraulic power steering (10) connected to said steering arms (6', 7') in the same point where said arms (6', 7') are connected to the hubs (8, 9), and two jointing heads (17 ; 17', 17", 17''', 17"") placed in a point corresponding to the connection between the steering levers (2', 3') and the steering arms (6', 7') ; the device comprising a shaped bar (11), connected to said jointing heads (17 ; 17', 17", 17''', 17"") of the power steering box, said bar (11) also connecting rigidly the two levers (2', 3') of the manually operated steering, so as to transmit the steering effort caused by the hydraulic assembly (10) of the power steering box to such levers (2', 3') and to the wheel hubs (8, 9).

2. A device according to claim 1, characterized in that said shaped bar (11) is connected to said two steering levers (2', 3') through the interposition of articulated flanges (16).

3. A device according to claim 1, characterized in that the connection between said shaped bar (11) and the jointing heads (17 ; 17', 17", 17''', 17"") of said power steering box is realized through the employment of ball-and-socket joints.

4. A device according to claim 1, characterized in that said power steering box is fastened to the already existing frame (20, 21) through the employment of a transverse connecting member (19).

## Patentansprüche

1. Vorrichtung zur Umwandlung einer handbetaetigten Lenkung in eine Servolenkung, wobei die handbetaetigte Lenkung zwei Lenkhebel (2', 3') und zwei Lenkstockhebel (6', 7') aufweist, die mit den Radnaben (8, 9) des Fahrzenges steif verbunden sind, dadurch gekennzeichnet, dass die Servolenkung ein Hydrolenkgehaeuse (10), das mit den Lenkstockhebeln (6', 7') in denselben Stellen verbunden sind, in denen sie mit den Naben (8, 9) in Verbindung stehen, und zwei Verbindungskoepfe (17, 17', 17", 17''') entahelt, die in einer, der Verbindung zwischen den Lenkhebeln (2', 3') und den Lenkstockhebeln (6', 7') entsprechenden Stelle angeordnet sind, wobei die Vorrichtung eine geformte, mit den genannten Verbindungskoepfen (17, 17', 17", 17''') des Servolenkgehaeuses verbundene Stange (11) hat, die zwei Hebel (2', 3') der handbetaetigten Lenkung steif verbindet, um somit die durch das Hydrolenkgehaeuse (10) der Servolenkung hervorgerufene Lenkkraft an diese Hebel (2', 3') und an die Radnaben (8, 9) zu uebertragen.

2. Vorrichtung gemaess dem Anspruch 1, dadurch gekennzeichnet, dass die geformte Stange (11) mit den zwei Lenkhebeln (2', 3') durch die Einfuegung von Gelenkflanschen (16) verbunden ist.

3. Vorrichtung gemaess dem Anspruch 1, dadurch gekennzeichnet, dass die Verbindung zwischen der geformten Stange (11) und den Verbindungskoepfen (17, 17', 17", 17''') des Servolenkgehaeuses durch die Kugelkupplungen durchgefuehrt wird.

4. Vorrichtung gemaess dem Anspruch 1, dadurch gekennzeichnet, dass das Servolenkgehaeuse an den schon vorhandenen Rahmen (20, 21) durch ein Querverbindungsglied (19) befestigt ist.

## Revendications

1. Dispositif pour transformer un mécanisme de direction manuelle en un mécanisme de servodirection, ledit mécanisme de direction manuelle comprenant deux leviers de direction (2', 3') et deux bras de direction (6', 7') joints aux moyeux (8, 9) des roues de la voiture, caractérisé en ce que ledit mécanisme de servodirection comprend un hydromécanisme de servodirection (10) joint aux dits bras de direction (6', 7') au même point ou lesdits bras (6', 7') sont joints aux moyeux (8, 9), et deux têtes d'enclenchement (17, 17', 17", 17''') placées en un point correspondant à la connexion entre les leviers de direction (2', 3') et les bras de direction (6', 7') ; le dispositif comprenant une barre façonnée (11) jointe aux dites têtes d'enclenchement du boîtier de servodirection, ladite barre (11) joignant rigidement aussi les deux leviers (2', 3') du mécanisme de direction manuelle, de façon à transmettre la force de direction, causée par l'ensemble hydraulique (10) du boîtier de servodirection, aux dits leviers (2', 3') et aux moyeux (8, 9) des roues.

2. Dispositif selon la revendication 1, caractérisé en ce que ladite barre façonnée (11) est jointe aux dits leviers de direction (2', 3') par l'interposition de plateaux articulés (16).

3. Dispositif selon la revendication 1, caractérisé en ce que la connexion entre ladite barre façonnée et les têtes d'enclenchement (17, 17', 17", 17''') du boîtier de servodirection est réalisée par l'emploi de joints à rotule.

4. Dispositif selon la revendication 1, caractérisé en ce que ledit boîtier de direction est fixé au châssis (20, 21) déjà existant par l'emploi d'un élément de connexion transversal (19).

*Fig. 1*

EP 0 307 366 B1

*fig. 2*

RIDE DIRECTION

EP 0 307 366 B1

*Jig. 3*

RIDE DIRECTION

EP 0 307 366 B1